**Europäisches Patentamt**

(19) **European Patent Office**

**Office européen des brevets**

(11) Publication number : **0 323 237 B1**

(12) **EUROPEAN PATENT SPECIFICATION**

(45) Date of publication of patent specification :
14.06.95 Bulletin 95/24

(51) Int. Cl.⁶ : **G02B 7/09**

(21) Application number : **88312372.1**

(22) Date of filing : **28.12.88**

(54) **Zoom lens driving apparatus.**

(30) Priority : **28.12.87 JP 331913/87**

(43) Date of publication of application :
**05.07.89 Bulletin 89/27**

(45) Publication of the grant of the patent :
**14.06.95 Bulletin 95/24**

(84) Designated Contracting States :
**DE FR GB**

(56) References cited :
**EP-A- 0 042 687
JP-A-60 108 814
US-A- 4 572 642
US-A- 4 735 494
PATENT ABSTRACTS OF JAPAN, vol. 8, no.
137 (P-282)(1574), 26 June 1984 & JP-A-59 037
509**

(73) Proprietor : **MATSUSHITA ELECTRIC
INDUSTRIAL CO., LTD.
1006, Oaza Kadoma
Kadoma-shi, Osaka-fu, 571 (JP)**

(72) Inventor : **Hirao, Yoshiaki
4-11-12, Furuichi
Habikino-shi Osaka-fu 583 (JP)**
Inventor : **Kuga, Ryuichiro
6-4-205, Myokenzaka
Katano-shi Osaka-fu 576 (JP)**
Inventor : **Yoneyama, Masayuki
A-204, Settsu-mansion
2-7, Ohata-cho
Takatsuki-shi Osaka-fu, 569 (JP)**
Inventor : **Ono, Shusuke
31-11, Fukakusahonmachi
Takatsuki-shi Osaka-fu, 569 (JP)**

(74) Representative : **Crawford, Andrew Birkby et al
A.A. THORNTON & CO.
Northumberland House
303-306 High Holborn
London WC1V 7LE (GB)**

## Description

## BACKGROUND OF THE INVENTION

### 1. Field of the Invention

This invention relates to a zoom lens driving apparatus for electrically controlling the zooming of a camera.

### 2. Description of the Prior Art

For zooming the zoom lens of video cameras and the like, generally, one method employed from the viewpoint of operability drives an image magnification varying lens section, which is a part of the zoom lens and has an image magnification varying function, by a motor via a power transmission mechanism. In this respect, the image magnification varying lens section is usually driven at a predetermined constant speed for simplifying the driving circuit.

Recently, as the focusing system of the zoom lens, a so-called inner focusing system has been put in practice which is featured in that a second lens component or a more rear side lens is driven. This system, as compared with the front focusing system, is light in weight of the focus adjusting lens section, small in driving force, and short in minimum shooting distance.

However, the zoom lens of the inner focusing system causes a focal shift of lens in response to a zooming operation. In the zoom lens of the inner focusing system, the moving distance s of the focus adjusting lens section ( composed of the second lens and a more rear side lens ) along the optical axis of the camera relative to a position at which an infinite-point object is focused is given by the following approximate expression:

$$s \doteqdot f^2/u \quad (1)$$

where f is the focal length of the zoom lens and u is the camera-to-object distance.

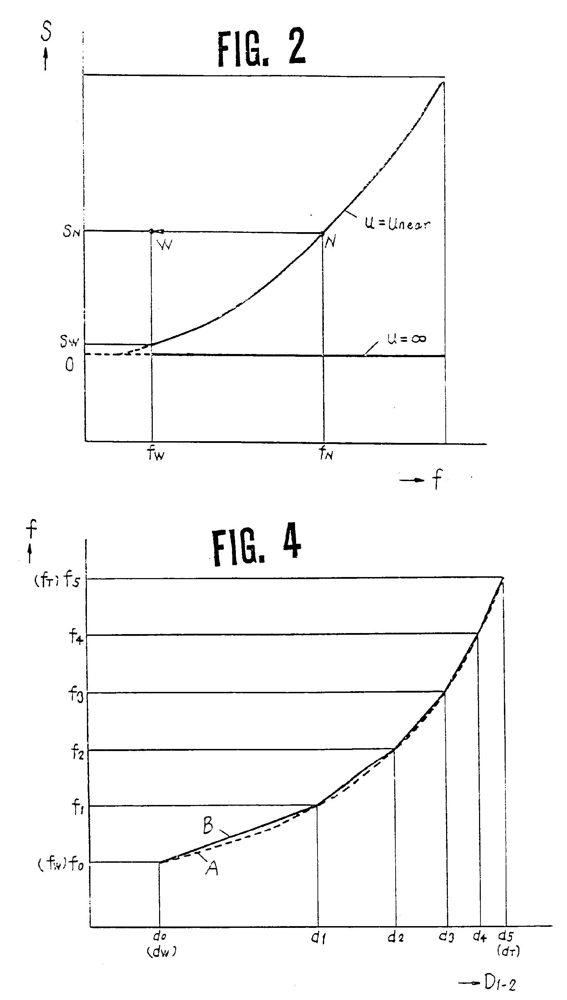

Fig. 2 shows a relationship of the expression (1) between the focal length f of the zoom lens ( abscissa ) and the moving distance s of the focus adjusting lens section ( ordinate ). That is, s = 0 for u = ∞, and s = $f^2/u_{near}$, for the minimum shooting distance ( u = $u_{near}$).

As will be clear from the expression (1) the moving distance s of the focus adjusting lens section is proportional to the square of the focal length f. Accordingly, in the zoom lens of the inner focusing system, even if the object distance u is constant, the moving distance ( i.e. the focused position ) of the focus adjusting lens section varies as the focal length varies. In Fig. 2, a point N corresponds to the focal length f = $f_N$ of the zoom lens, indicating that the lens is focused on an object positioned at the minimum shooting distance ( the moving distance amount of the focus adjusting lens section = $s_N$ ). If the zoom lens is subjected to zooming such that the focal length varies from $f_N$ to $f_W$ ( $f_N > f_W$ ) with the position of the object kept unchanged and the focus adjusting lens section also unchanged, the zoom lens assumes the state represented by a point W in Fig. 2 ( the moving distance of the focus adjusting lens section = $s_W$ ), resulting in a large focal shift ( $|s_N - s_W|$ ) where $s_W = f_W^2/ u_{near}$.

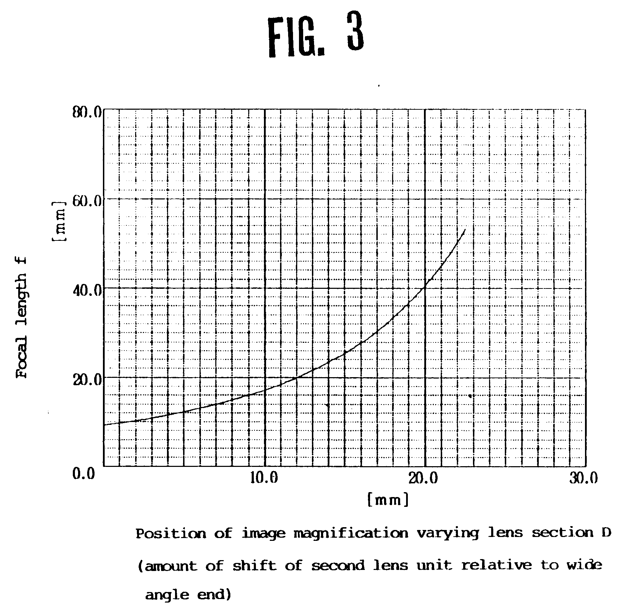

Generally, there is no linear relationship between the position D of the image magnification varying lens section and the corresponding focal length f of the zoom lens. To describe the relationship with taking a conventional four-component zoom lens for the video camera as an example, Fig. 3 shows an example of the relationship between the position D of the image magnification varying lens section of the conventional zoom lens and the corresponding focal length f of the zoom lens. In Fig. 3, the abscissa represents the position D of the image magnification varying lens section ( the amount of shift of the second lens component ) relative to the wide angle end, while the ordinate axis represents the corresponding focal length f of the zoom lens. In the conventional four-component zoom lens for the video camera, as shown in Fig. 3, the amount of change ( df/dD ) of the focal length f of the zoom lens with respect to a change of the position D of the image magnification varying lens section has a tendency to increase as the focal length becomes larger.

Assume that a zooming operation is performed with the object distance unchanged, and differentiate both sides of the expression (1) by time t, the following expression is obtained:

$$( ds/dt ) = ( 2f/u ) \cdot ( df/dt ). \quad (2)$$

By modifying the expression (2), the following relation is obtained:

$$( ds/dt ) = (2f/u) \cdot (df/dD) \cdot (dD/dt). \quad (3)$$

Assuming that the zooming operation is performed at a fixed speed, the image magnification varying lens section is driven at a predetermined constant speed, i.e., ( dD/dt ) in the expression (3) is constant, so that the temporal change ( ds/dt ) of the moving distance s of the focus adjusting lens section is proportional to ( df/dD ). Thus, as described above, ( df/dD ) increases as the focal length f becomes large, and the amount of the focal shift increases.

Nowadays, from the viewpoint of operability, an auto focus adjusting mechanism has been becoming indispensable to the camera with the zoom lens built therein. However, where the auto focus adjusting mechanism is incorporated with the zoom lens of the inner focusing system, as described above, the amount of change of the focal shift caused by zooming becomes large, especially on the large focal length side. Consequently, the response of the auto focus adjusting mechanism cannot follow such change, resulting in a severe out-of-focus state or mis-operation.

On the other hand, a focus correcting device effective during zooming is publicly known which makes a calculation using the position information of the focus adjusting lens section and of the image magnification varying lens section of the zoom lens and controls the focusing lens section to correct an out-of-focus state caused during zooming ( Japanese Patent Application Laid-Open No. 49-115322). However, also in this system, the amount of change of the focal shift due to zooming increases on the large focal length side, so that a correcting operation cannot follow the change, thereby degrading the lens response.

Japanese patent application JP-A-60-108814 discloses a lens moving device in which the zoom speed is kept at a prescribed speed from the wide angle end to a position near the telephoto end, and made lower than the prescribed speed near the telephoto end.

United States patent US-A-572,642 discloses an automatic focusing device comprising:

a lens optical system having a focusing function and a zooming function;

an electric motor for moving said lens optical system to effect zooming;

control means for controlling rotation of said motor selectively to high speed rotation and low speed rotation;

focus detecting means for detecting the focus condition of an object image formed by said lens optical system; and

gate means receptive of a signal of said focus detecting means for detecting a signal for the motor high speed rotation by said control means.

It is an object of the present invention to provide a zoom lens driving apparatus for a zoom lens of the inner focusing system which apparatus causes no degradation of an in-focus state even during zooming and always results in a good response.

According to the present invention there is provided a zoom lens driving apparatus comprising:

zoom encoding means for detecting a position of an image magnification varying lens section having an image magnification varying function of a zoom lens and outputting a position signal indicative of a detected position of the image magnification varying lens section within a range between the wide angle end and the telephoto end of the zoom lens;

zoom driving means for driving the image magnification varying lens section; and

zoom control means for determining a zoom driving speed and controlling the zoom driving means to move the image magnification varying lens section at a speed corresponding to the zoom driving speed, characterized in that the zoom control means is responsive to the position signal outputted from the zoom encoding means for determining the zoom driving speed to be inversely proportional to a value for the ratio of the change of the focal length of the zoom lens to a change of the position of the image magnification varying lens section.

With this configuration, the zooming control unit always perceives the position of the image magnification varying lens section detected by the zoom encoder, and, in accordance with the predetermined relationship between the position of the image magnification varying lens section and the zoom driving speed, a higher speed is set on one side where the focal length of the zoom lens corresponding to the position of the image magnification varying lens section is small than on another side where the focal length is large. By supplying to the zoom driving unit a control signal determining a driving speed to be inversely proportional to the ratio of a change of the position of the image magnification varying lens section, a changing tendency of the amount of the focal shift, which in the zoom lens of the inner focusing system would otherwise abruptly increase with increasing focal length, is remarkably suppressed, so that an auto focus adjusting mechanism or a focus correcting device effective during zooming, provided in the zoom lens, can function so satisfactorily as to follow a focal shift of the zoom lens, whereby the lens control of superior response can always be achieved.

Fig. 1 is a block diagram showing an embodiment of the present invention;

Fig. 2 is a graph showing a relationship between the focal length of a zoom lens of the inner focusing system and the moving distance of a focus adjusting lens section;

Fig. 3 is a graph showing a relationship between the position of the image magnification varying lens section of a conventional four-component zoom lens and the corresponding focal length of the zoom lens;

Fig. 4 is a graph showing a relationship between the position of the image magnification varying lens section and the focal length of a zoom lens according to the embodiment which is used to set a zoom driving speed;

Fig. 5 is a flowchart for explanatory of the operation during zooming of a focal shift correcting device; and

Fig. 6 is a block diagram for explanatory of important parts of the focal shift correcting device.

DESCRIPTION OF THE PREFERRED EMBODIMENT

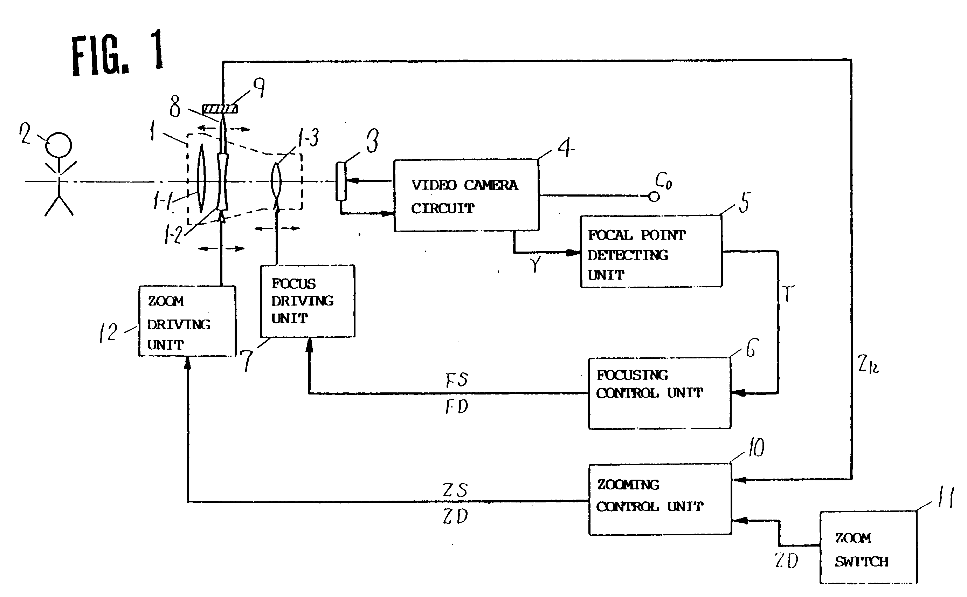

Fig. 1 is a block diagram showing an embodiment of the present invention which is applied to a video camera provided with an auto focus adjusting device. In Fig. 1, a zoom lens 1 is composed of a first lens unit 1-1 having a positive refracting power, a second lens unit 1-2 having a negative refracting power and an image magnification varying function, and a third lens unit 1-3 having a positive refracting power and an image forming function, these units being arranged in this order from the side of an object to be shot. Although each lens unit is illustrated as being made of one convex lens or concave lens for the sake of convenience, this in practice is made of a plurality of convex lenses or concave lenses. In the embodiment, the second lens unit 1-2 constitutes an image magnification varying lens section, whereas the third lens unit 1-3 constitutes a focus adjusting lens section.

The image of an object 2 is inputted to a CCD 3 through the zoom lens 1. A video camera circuit 4 drives the CCD 3 and subjects an electrical signal obtained by the CCD 3 to a variety of well-known signal processing, thereby outputting a video signal ( e.g. an NTSC signal ) Co.

A focal point detecting unit 5 judges the focal state of the zoom lens 1 by detecting an increase/decrease, over a plurality of fields, of components of frequencies higher than a certain frequency ( hereinafter referred to as high-frequency components ) contained in a luminance signal given from the video camera circuit 4, and applies a control signal T to a focusing control unit 6. This type of focal point detecting means is publicly known and disclosed in greater detail in, for example, a paper of Ishida et al. ( "NHK Gijutsu Kenkyu" vol. 17, No. 1, page 21, issued in 1965 ) titled "Auto Focus Adjustment of Television Camera in In-Focus Control Servo System".

The focusing control unit 6 generates, on the basis of the control signal T, a focusing speed signal FS and a focusing direction signal FD for defining a driving speed and a driving direction, respectively, and supplies them to a focusing driving unit 7. The focusing driving unit 7 moves the third lens component 1-3 of the zoom lens 1 to a given position to achieve auto focus adjustment.

The operation of a zoom lens driving apparatus fulfilling the object of the present invention will now be described which decreases the ratio of change of a focal shift that would appear in response to the zooming of the zoom lens of the inner focusing system and increase particularly on the large focal length side.

Let $D_{1-2}$ represent the position of the image magnification varying lens section of the zoom lens 1 which is represented by the distance between the principal points of the first lens unit 1-1 and the second lens unit 1-2 ( hereinafter referred to as the distance between lens units 1-1 and 1-2 ). The relationship between $D_{1-2}$ and the focal length f of the zoom lens 1 is identical with that of the foregoing expression (3) with D replaced by $D_{1-2}$. Let $s_3$ represent the moving distance of the focus adjusting lens section 1-3 relative to its position focused on an infinite-point object as a reference. Accordingly, the foregoing expression (3) becomes as follows:

$$( ds_3/dt ) = ( 2f/u ) \cdot ( df/dD_{1-2} ) \cdot ( dD_{1-2}/dt ). \quad (4)$$

If the value of ( $dD_{1-2}/dt$ ) representing the zooming speed is set so as to be proportional to ( $df/dD_{1-2}$ )$^{-1}$, it indicates the temporal change of the moving distance $s_3$ of the focus adjusting lens section 1-3, i.e. the amount of focal shift. The term of ( $ds_3/dt$ ) is proportional to the first power of the focal length f. That is, the amount of focal shift holds a linear relationship with the focal length over the whole range of focal length, and the ratio of change of the focal shift is remarkably suppressed on the large focal length side.

A method of implementing the foregoing operation in an actual system will now be described.

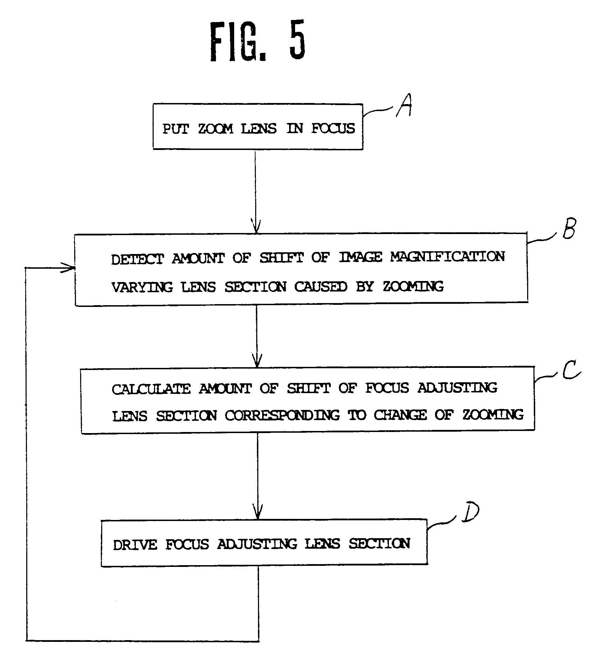

In Fig. 4, a dotted line A illustrates an example of the relationship between f and $D_{1-2}$ wherein the focal length f of the zoom lens 1 is represented by ordinate and the distance $D_{1-2}$ between lens units 1-1 and 1-2 of the zoom lens 1 by abscissa. That is, the distance $D_{1-2}$ varies between $d_W$ and $d_T$, whereas the focal length f varies between $f_W$ and $f_T$ correspondingly. The affixed letters W and T mean a wide angle setting end ( the smallest focal length ) and a telephoto end ( the largest focal length ), respectively.

In the embodiment, as shown in Fig. 4, individual values $d_0$, $d_1$, $d_2$, $d_3$, $d_4$ and $d_5$ of the distance $D_{1-2}$ are set so as to correspond to individual values $f_0$, $f_1$, $f_2$, $f_3$, $f_4$ and $f_5$ of the focal length f with which the range of focal length ( $f_T$ to $f_W$ ) is divided equally into five, and a zoom encoder 9 is configured so as to discriminate at least such six values of $D_{1-2}$. The optimum zoom driving speed depending on the position of the image magnification varying lens section, featuring the spirit of the present invention, will be set in the following manner.

In Fig. 4, a solid line B is an approximate polygonal line based on the dotted line A representing the relationship between the focal length f and the distance $D_{1-2}$, which is drawn by connecting the respective values of the six points $d_0$, $d_1$, $d_2$, $d_3$, $d_4$ and $d_5$ of $D_{1-2}$. In this regard, the gradient $h_k$ of each polygonal line segment in each interval, $d_{k-1}$ to $d_k$ ( k = 1, 2, ..., 5 ) is given by

$$h_k = ( f_k - f_{k-1} )/( d_k - d_{k-1} ) \quad (5)$$
$$( k = 1, 2, ..., 5 )$$

which is the representative of ( $df/dD_{1-2}$ ) for each interval. Hence, the zoom driving speed is set in each interval so as to be inverse proportional to $h_k$. That is, the zoom driving speed $v_k$ ( k = 1, 2, ..., 5 ) of each interval is given by

$$v_1:v_2:v_3:v_4:v_5 = h_1^{-1}:h_2^{-1}:h_3^{-1}:h_4^{-1}:h_5^{-1}. \quad (6)$$

Therefore, the zoom driving speed is uniquely determined by the expression (6) and the conditions of response of the auto focus adjusting mechanism.

With the foregoing provisions, the ratio of change of the focal shift or the amount of focal shift ( $ds_3/dt$ ) in each interval becomes substantially proportional to the focal length f in accordance with the expression (4), and the ratio of change of the focal shift is remarkably suppressed on the large focal length side.

Referring back to Fig. 1, in the embodiment, when the second lens unit 1-2 begins moving, a sliding element 8 linked to that lens unit moves on the zoom encoder 9, and the zoom encoder 9 reads out the current position of the second lens unit 1-2 which will fall within one of the five intervals described above, and delivers an image magnification varying lens position signal $Z_k$ ( k = 1, 2, ..., 5 ). A zooming control unit 10 receives the image magnification varying lens position signal $Z_k$ and generates a zoom speed signal ZS which designates the driving speed $v_k$ defined as above of the second lens 1-2. The zooming control unit 10 is readily realized by a microcomputer, for example. When a cameraman depresses a zoom switch 11 to perform zooming, a zooming signal ZD is sent to the zooming control unit 10 which designates the direction of zooming with the cameraman's wishes. A zoom driving unit 12 receives the zooming signal ZD and the zoom speed signal ZS and drives the second lens unit 1-2.

In the foregoing manner, when the zoom lens 1 is subjected to zooming, the auto focus adjusting mechanism responds sufficiently to the focal shift of the zoom lens 1 and always achieves lens control satisfactorily.

As will be appreciated, the embodiment can be very effectively applied to the video camera and the like provided with the foregoing correcting device for correcting the out-of-focus state due to zooming by making a calculation on the basis of the position information of the focus adjusting lens section and image magnification varying lens section of the zoom lens.

In the correcting device, the amount of shift b of the focus adjusting lens section caused by zooming is calculated in accordance with a function F on the basis of the position a of the focus adjusting lens section in the in-focus state and the amount of shift c thereof from the reference position ( e.g. the telephoto end position ) of the image magnification varying lens section when zooming is performed as follows:

$$b = F( a, c )  (7)$$

where F( a, c ) is the function determined by the refracting power of the lens system and the distance of principal points.

Fig. 5 is a flowchart showing the operation of the correcting device. In step A, the zoom lens is put in focus manually or by means of the auto focus adjusting mechanism. In step B, zooming is performed, and the amount of shift a of the focus adjusting lens section and the amount of shift c of the image magnification varying lens section both caused by zooming are detected. In step C, the amount of shift b of the focus adjusting lens section corresponding to a change of zooming is calculated in accordance with the relationship of the expression (7). In step D, the focus adjusting lens section is driven on the basis of the results of calculation such that the imaging position of the zoom lens is maintained unchanged.

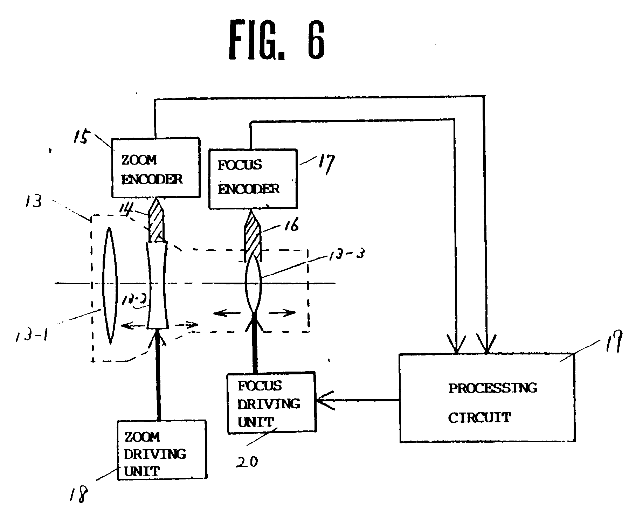

The foregoing correcting function will be realized by such a configuration as shown in Fig. 6. A zoom lens 13 has a configuration similar to that of the zoom lens 1 shown in Fig. 1, in which 13-2 is the image magnification varying lens section and 13-3 is the focus adjusting lens section. The positions of the image magnification varying lens section 13-2 and the focus adjusting lens section 13-3 are detected by a sliding element 14 and a zoom encoder 15 and by another sliding element 16 and a focus encoder 17, respectively. The image magnification varying lens section 13-2 is driven by a zoom driving unit 18 to perform zooming. A processing circuit 19 performs the foregoing calculation to send the results of calculation to a focus driving unit 20. The focus driving unit 20 moves the focus adjusting lens section 13-3 on the basis of the results of calculation to a position where the amount of shift b corresponding to the result of calculation is reached, and then keeps it stationary, whereat the adjustment of focus is completed. The processing circuit 19 can be formed by a microcomputer including a read only memory ( ROM ) in practice.

The embodiment of the present invention can be very effectively applied to such a correcting device as above for correcting the focal shift caused by zooming. That is, according to the embodiment, the ratio of change of the focal shift is remarkably suppressed on the large focal length side, and the processing time of, for example, the microcomputer for correcting the out-of-focus state caused by zooming can be ensured enough. Further, according to the embodiment, since the amount of focal shift has a linear relationship with the focal length, the calculation of correcting the out-of-focus state can be simplified.

## Claims

1. A zoom lens driving apparatus comprising:

zoom encoding means (9) for detecting a position (D) of an image magnification varying lens section (1-2) having an image magnification varying function of a zoom lens (1) and outputting a position signal indicative of a detected position of the image magnification varying lens section within a range between the wide angle end and the telephoto end of the zoom lens;

zoom driving means (12) for driving the image magnification varying lens section; and

zoom control means (10) for determining a zoom driving speed and controlling the zoom driving means to move the image magnification varying lens section at a speed corresponding to the zoom driving speed,

characterized in that the zoom control means (10) is responsive to the position signal outputted from the zoom encoding means (9) for determining the zoom driving speed to be inversely proportional to a value for the ratio of the change of the focal length (f) of the zoom lens to a change of the position of the image magnification varying lens section (D).

2. A zoom lens driving apparatus according to claim 1, wherein the range of the image magnification varying lens section is divided into a plurality of divisional regions arranged continuously, and the zoom control means (10) sets the zoom driving speed so that one zoom driving speed corresponds to one of the plurality of divisional regions.

3. A zoom lens driving apparatus according to claim 2, wherein a representative value of the focal length and a representative value of the position of the image magnification varying lens section are set for each of the plurality of divisional regions and the zoom control means (10) determines the zoom driving speed to be inversely proportional to the ratio for change of the representative value of the focal length to a change of the representative value of the position of the image magnification varying lens section between each adjacent pair of the plurality of divisional regions.

4. A zoom lens driving apparatus according to claim 1, 2 or 3 further comprising a focus driving means (20) for driving a third lens unit (1-3) of the zoom lens (13).

## Patentansprüche

1. Antriebsvorrichtung für ein Zoomobjektiv mit:

einer Zoom-Kodiereinrichtung (9) zum Erfassen einer Position (D) eines Bildvergrößerungs-Varioobjektivabschnittes (1-2) mit der Bildvergrößerungs-Variofunktion eines Zoomobjektivs (1) und zum Ausgeben eines Positionssignals, welches die erfaßte Position des Bildvergrößerungs-Varioobjektivabschnitts in einem Bereich zwischen dem Weitwinkelende und dem Teleende des Zoomobjektivs anzeigt;

einer Zoom-Antriebseinrichtung (12) zum Antreiben des Bildvergrößerungs-Varioobjektivabschnittes; und

einer Zoom-Steuereinrichtung (10) zum Festlegen einer Zoom-Antriebsgeschwindigkeit und zum Steuern der Zoom-Antriebseinrichtung, so daß sich der Bildvergrößerungs-Varioobjektivabschnitt mit einer Geschwindigkeit bewegt, die der Zoom-Antriebsgeschwindigkeit entspricht,

dadurch gekennzeichnet, daß die Zoom-Steuereinrichtung (10) auf das von der Zoom-Kodiereinrichtung (9) ausgegebene Positionssignal anspricht, um die Zoom-Antriebsgeschwindigkeit festzulegen, die umgekehrt proportional zu einem Wert für das Verhältnis der Veränderung der Brennweite (f) des Zoomobjektivs zur Veränderung der Position des Bildvergrößerungs-Varioobjektivabschnittes (D) ist.

2. Antriebsvorrichtung für ein Zoomobjektiv gemäß Anspruch 1, wobei der fortlaufend angeordneter Teilregionen unterteilt ist und die Zoom-Steuereinrichtung (10) die Zoom-Antriebsgeschwindigkeit derart einstellt, daß eine Zoom-Antriebsgeschwindigkeit jeweils einer aus der Vielzahl der Teilregionen entspricht.

3. Antriebsvorrichtung für ein Zoomobjektiv gemäß Anspruch 2, wobei ein repräsentativer Wert der Brennweite und ein repräsentativer Wert der Position des Bildvergrößerungs-Varioobjektivabschnittes für jede aus der Vielzahl der Teilregionen eingestellt sind und die Zoom-Steuereinrichtung (10) die Zoom-Antriebsgeschwindigkeit festlegt, welche umgekehrt proportional zum Verhältnis der Veränderung des repräsentativen Wertes der Brennweite zu einer Veränderung des repräsentativen Wertes der Position des Bildvergrößerungs-Varioobjektivabschnittes zwischen jedem benachbarten Paar aus der Vielzahl der Teilregionen ist.

4. Antriebsvorrichtung für ein Zoomobjektiv gemäß Anspruch 1, 2 oder 3, welche desweiteren eine Brennpunkt-Antriebseinrichtung (20) zum Antreiben einer dritten Objektiveinheit (1-3) des Zoomobjektivs (13) umfaßt.

## Revendications

1. Appareil d'entraînement d'un objectif zoom comprenant :

un dispositif de codage zoom (9) pour détecter une position (D) d'une section d'objectif faisant varier l'agrandissement d'image (1-2) ayant une fonction de variation d'agrandissement d'image d'un objectif zoom (1) et fournissant un signal de position indicateur d'une position détectée de la section d'objectif faisant varier l'agrandissement d'image dans l'intervalle compris entre l'extrémité de grand angle et l'extrémité de téléobjectif de l'objectif zoom ;

un dispositif d'entraînement de zoom (12) pour entraîner la section d'objectif faisant varier l'agrandissement d'image ; et

un dispositif de commande de zoom (10) pour déterminer une vitesse d'entraînement de zoom et pour commander le dispositif d'entraînement de zoom afin de déplacer la section d'objectif faisant varier l'agrandissement d'image à une vitesse correspondant à la vitesse d'entraînement de zoom,

caractérisé en ce que le dispositif de commande de zoom (10) est sensible au signal de position fourni par le dispositif de codage de zoom (9) pour déterminer la vitesse d'entraînement de zoom pour qu'elle soit inversement proportionnelle à une valeur du rapport de variation de la distance focale (f) de l'objectif zoom sur une variation de la position de la section d'objectif faisant varier l'agrandissement d'image (D).

2. Appareil d'entraînement d'un objectif zoom selon la revendication 1, dans lequel l'intervalle de la section d'objectif faisant varier l'agrandissement d'image est divisé en une pluralité de zones divisionnelles disposées de façon continue, et le dispositif de commande de zoom (10) règle la vitesse d'entraînement de zoom de sorte qu'une vitesse d'entraînement de zoom correspond à une de la pluralité des zones divisionnelles.

3. Appareil d'entraînement d'un objectif zoom selon la revendication 2, dans lequel une valeur représentative de la distance focale et une valeur représentative de la position de la section d'objectif faisant varier l'agrandissement d'image sont réglées pour chaque zone de la pluralité des zones divisionnelles et le dispositif de commande de zoom (10) détermine la vitesse d'entraînement de zoom pour qu'elle soit inversement proportionnelle au rapport de variation de la valeur représentative de la distance focale sur une variation de la valeur représentative de la position de la section d'objectif faisant varier l'agrandissement d'image entre chaque paire voisine de la pluralité de zones divisionnelles.

4. Appareil d'entraînement d'un objectif zoom selon la revendication 1, 2 ou 3 comprenant en outre un dispositif d'entraînement de mise au point (20) pour entraîner une troisième unité d'objectif (1-3) de l'objectif zoom (13).

# FIG. 1

EP 0 323 237 B1

# FIG. 2

# FIG. 4

# FIG. 3

Position of image magnification varying lens section D
(amount of shift of second lens unit relative to wide
angle end)

# FIG. 5

PUT ZOOM LENS IN FOCUS — *A*

DETECT AMOUNT OF SHIFT OF IMAGE MAGNIFICATION VARYING LENS SECTION CAUSED BY ZOOMING — *B*

CALCULATE AMOUNT OF SHIFT OF FOCUS ADJUSTING LENS SECTION CORRESPONDING TO CHANGE OF ZOOMING — *C*

DRIVE FOCUS ADJUSTING LENS SECTION — *D*

# FIG. 6

EP 0 323 237 B1